# EUROPEAN PATENT APPLICATION

(11) **EP 4 050 897 A1**
(43) Date of publication of application: **31.08.2022**
(21) Application number: 22158879.1
(22) Date of filing: 25.02.2022
(51) Int. Cl.: H04N 21/222, H04H 20/18, H04N 21/2187

(54) **SYSTEMS, METHODS AND DEVICES FOR COMPRESSING AUDIOVISUAL CONTENT**

(30) Priority: 25.02.2021 IT 202100004460
(71) Applicant: Sky Italia S.r.L., 20138 Milano (IT)
(72) Inventor: Ubertini, Gabriele, 00138 Roma (IT); Gandino, Davide, 00138 Roma (IT)
(74) Representative: Hoffmann Eitle

(57) **Abstract**

The present invention relates to a system, method, and devices for compressing audiovisual content. According to the system there is provided a local encoder (100) located on site with a transmission entity (10), the local encoder (100) being configured to receive a first audiovisual content (150) and to produce a first compressed audiovisual content by processing the first audiovisual content (150); wherein the first audiovisual content includes one or more first audiovisual temporal references; a remote encoder (200) located (20) remotely relative to the local encoder (100), the remote encoder (200) being configured to receive a second audiovisual content (165) and to produce a second compressed audiovisual content by processing said second audiovisual content at least partially; wherein said second audiovisual content includes one or more second audiovisual temporal references.

## Description

### FIELD OF THE INVENTION

The present invention relates to systems, methods, and devices for compressing audiovisual content.

### BACKGROUND OF THE INVENTION

In TV-IP technology (comprising streaming, OTT, etc.) television signals are received by means of broadband internet connections, rather than by satellite or digital terrestrial broadcasting. Access to audiovisual content is often offered in a video on demand mode and combined with access to the web. In the TV-IP platform it is very important to maintain a high level of service, which includes a high degree of availability, i.e. which reduces downtimes to a minimum or to zero in the event of failure of one or more components. In this context, failure of an encoder (or of the components related to an encoder) can be critical, given that it could halt the transmission of television programmes or could result in a poor quality of transmission.

### SUMMARY OF THE INVENTION

The object of the present invention is to address at least one of the problems tied to the known techniques and thus to improve the latter. The object is achieved by the independent claims. Advantageous embodiments are defined by the dependent claims. Furthermore, aspects are provided for explanatory purposes as follows:
A1. A system for compressing audiovisual content comprising: a local encoder (100) located on site with a transmission entity (10), the local encoder (100) being configured to receive a first audiovisual content (150) and to produce a first compressed audiovisual content by processing the first audiovisual content (150); wherein the first audiovisual content includes one or more first audiovisual temporal references; a remote encoder (200) located (20) remotely relative to the local encoder (100), the remote encoder (200) being configured to receive a second audiovisual content (165) and to produce a second compressed audiovisual content by processing said second audiovisual content at least partially; wherein said second audiovisual content includes one or more second audiovisual temporal references.
A2. The system according to aspect A1, wherein said one or more first audiovisual temporal references correspond to said one or more second audiovisual temporal references.
A3. The system according to one of the aspects A1 or A2, wherein each one of the first and the second compressed audiovisual content includes one or more compressed audiovisual temporal references at respective compressed frames.
A4. The system according to aspect A3, wherein the first and the second compressed audiovisual content comprise a respective first and second sequence of compressed frames, each one of said sequences comprising one or more frames associated with respective one or more compressed temporal references, wherein the first and the second audiovisual content comprise a respective first and second sequence of input frames, each one of said sequences comprising one or more input frames associated with one or more respective first and second temporal references, wherein said one or more compressed temporal references respect the temporal sequence of said one or more first and second temporal references.
A5. The system according to one of aspects A3 or A4, wherein said first and second compressed audiovisual content are substantially identical and wherein said one or more compressed audiovisual temporal references included in the first compressed audiovisual content and said one or more compressed audiovisual temporal references included in the second compressed audiovisual content are substantially identical.
A6. The system according to any one of aspects A3 to A5, wherein the first and/or the second compressed audiovisual content comprise one or more segments, each of said segments comprising one or more frames, and wherein said one or more compressed audiovisual temporal references are inserted in at least one of said frames.
A7. The system according to aspect A6, wherein a frame of the first compressed audiovisual content comprising a first compressed audiovisual temporal reference between said one or more compressed audiovisual temporal references is substantially identical to a frame of the second compressed audiovisual content containing the same compressed audiovisual temporal reference.
A8. The system according to any one of the preceding aspects, wherein said first audiovisual content and said second audiovisual content are substantially identical and wherein said one or more first audiovisual temporal references and said one or more second audiovisual temporal references are substantially identical.
A9. The system according to any one of aspects A1 to A7, comprising an intermediate encoder (160) configured to produce the second audiovisual content (165) by compressing, at least partially, the first audiovisual content (150).
A10. The system according to aspect A9, wherein the intermediate encoder is configured to process said one or more first audiovisual temporal references included in the first audiovisual content (150), thereby producing said one or more second audiovisual temporal references.
A11. The system according to aspect A9, wherein said second audiovisual temporal references are substantially identical to said compressed audiovisual temporal references.
A12. The system according to any one of the preceding aspects, wherein the remote encoder (200) is configured to receive a request message.
A13. The system of aspect A12, wherein the remote encoder (200) is configured to compress the second audiovisual content on the basis of the request message.
A14. The system according to any one of the preceding aspects, wherein the local encoder 100 is configured to receive the first audiovisual content from a source of audiovisual content (300).
A15. The system according to any one of the preceding aspects, wherein the local encoder is configured to process the first audiovisual content (150) with a delay corresponding to a time of reception of the second audiovisual content by the remote encoder.
A16. The system according to any one of the preceding aspects, wherein the local encoder and the remote encoder are configured to contemporaneously process the first audiovisual content (150) and the second audiovisual content (165), respectively.
A17. A method for compressing audiovisual content, the method comprising the steps of: receiving (S101), at a local encoder, a first audiovisual content; producing (S102), at the local encoder, a first compressed audiovisual content by compressing the first audiovisual content; wherein the first audiovisual content includes one or more first audiovisual temporal references; receiving (S103), at a remote encoder located remotely (20) relative to the local encoder, a second audiovisual content; producing (S104), at the remote encoder, a second compressed audiovisual content by compressing the second audiovisual content; wherein the second audiovisual content includes one or more second audiovisual temporal references.
A18. A remote encoder (200) located remotely (20), comprising: a receiving means (210) configured to receive a second audiovisual content (165); an encoding means (220) configured to produce a second compressed audiovisual content by compressing said second audiovisual content; wherein the second audiovisual content includes one or more second audiovisual temporal references.
A19. A local encoder (100) located on site with a transmission entity (10), comprising: a receiving means (110) configured to receive a first audiovisual content (150); an encoding means (120) configured to produce a first compressed audiovisual content by compressing said first audiovisual content;
   wherein the first audiovisual content includes one or more second audiovisual temporal references.
A20. A computer program configured to execute, when said program is run on a computer, all of the steps according to aspect A17.
A21. A medium for storing computer program configured to execute, when said program is run on a computer, all of the steps according to aspect A17.

### LIST OF FIGURES

Figure 1 is a block diagram of a system according to one embodiment of the present invention;
Figure 2 is a flow diagram according to one embodiment of the present invention;
Figure 3 is a block diagram of a remote encoder according to one embodiment of the present invention;
Figure 4 is a block diagram of a local encoder according to one embodiment of the present invention;
Figure 5 is a block diagram of a computer capable of implementing the present invention according to one embodiment.

### DETAILED DESCRIPTION

One way to increase availability is to have multiple parallel encoders (duplication or multiplication of encoding instances, or parallel encoding instances). In this case, if one encoder freezes, another encoder can replace the frozen encoder, i.e. the audiovisual stream (during streaming, multimedia streaming, audio and/or video data streaming) can be obtained from another encoder. That is, the user device receives the audiovisual stream from the other encoder. Consequently, users can continue watching the television programme.

However, in the event of an encoder failure, replacement with another encoder, i.e. the fact that the audiovisual stream is obtained from another encoder, can create interruptions in the audiovisual stream received by the user device. Furthermore, this solution is costly and complex to implement. In fact, it requires a complete redundancy that is always active, even 24/7, and entails a linear multiplication of costs. In other words, the solution of scaling the infrastructure by multiplying the number of instances in a linear and homogeneous manner increases the demand for infrastructure and the workload on the system (for example, due to the necessity of maintaining homogeneous formats and configurations among the encoding instances).

Encoder will be understood hereinafter as a compression device, that is, the encoder produces an audio/video output signal in a compressed format that is suitable for transmission via the internet. The compressed format can vary on the basis of a number of variables, including the type of device that receives the television programme (for example, a 4K TV, a smartphone, etc. receive different types of compressed formats). The transmission of a television programme via the internet takes place through streaming, for example using HLS, DASH, or any other suitable protocol.

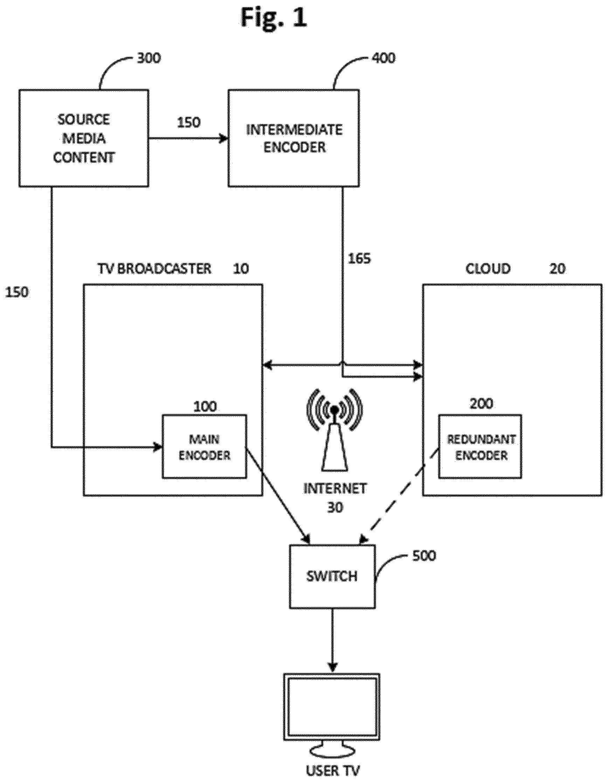

A first embodiment of the present invention will now be described with reference to figure 1, which illustrates a block diagram of a system for compressing audiovisual content. The system comprises a local encoder 100 and a remote encoder 200.

The local encoder 100 is located on site with a transmission entity 10. Said local encoder can be located in the transmission entity, i.e. the local encoder can be part of the transmission entity. Alternatively, it can be associated therewith, in the sense that the local encoder can communicate (locally) with the transmission entity. The transmission entity can be a TV broadcaster or in general an entity configured to transmit an audiovisual signal via the internet, for example through streaming (in particular, for example through http streaming, but other protocols can be used), OTT, etc.

The local encoder 100 is configured to receive a first audiovisual content 150 and to produce a first compressed audiovisual content by processing the first audiovisual content 150. Processing content (for example audiovisual content, data, information) includes compressing and/or encoding that content. First audiovisual content (source media content) refers to content for streaming on the internet. Said first audiovisual content comprises video and/or audio content in an uncompressed format, for example SDI. Said first audiovisual content is transmitted by a source of audiovisual content (source device or content distribution device). In the case of content that has already been recorded, the source of audiovisual content can be for example a video file, a DVD or blue-ray disc or any means that can record and store video content. In the case of live content, the source of audiovisual content can be a server, a camera, a smartphone, a tablet, etc.

The first audiovisual content includes one or more first audiovisual temporal references. Said first audiovisual temporal references comprise information indicating in which temporal order the first audiovisual content is reproduced. For example, the first audiovisual temporal references can constitute a set of temporal data (t₁, ..., tₘ) that indicate the temporal sequence of the input frames making up the first audiovisual content, or which are comprised in the first audiovisual content. In one example, the first audiovisual content is made up of n frames (f₁, ..., fₙ). The temporal references can be inserted in every frame, i.e. the temporal reference t₁ is inserted in the frame f₁, the temporal reference t₂ is inserted in the frame f₂, etc., the temporal reference tₙ is inserted in the frame fₙ. Or, the temporal references can be inserted every r frames (wherein r can be a predetermined number), i.e. the temporal reference t₁ is inserted in the frame f₁ and the temporal reference t₂ is inserted in the frame f₁₊ᵣ. Furthermore, said first audiovisual temporal references relate to the non-compressed domain, i.e. they are in a non-compressed format. Said first audiovisual temporal references can be inserted in the linear stream, that is, they can be based on the system clock. For example, the local encoder 100 processes the first available audiovisual content, preferably in a non-compressed format, which can include, as the first audiovisual temporal references, an SMPTE (Society of Motion Picture and Television Engineers) timecode, such as, for example, a VITC (Vertical Interval TimeCode). In general, the first temporal audiovisual references can be references present in non-compressed formats of audiovisual content, which are thus capable of establishing the sequence of frames irrespective of how they are possibly subsequently compressed.

The remote encoder 200 (also a redundant encoder, cloud encoder, off-site encoder) is located remotely relative to the local encoder 100. Therefore, remote as opposed to on site indicates that an encoder is located in proximity to the transmission entity and is accessible and controlled by the latter in a more direct manner, whereas the remote one is typically external and controlled (e.g. monitored, instantiated, etc.) by an external entity. Remotely refers, for example, to the fact that the remote encoder can be located in a cloud. Or else it can be located with (or in) a transmission entity other than the transmission entity 10 associated with the local encoder. Furthermore, said encoder can preferably be accessible via the internet. The connection can be at least in part a best-effort connection or a VPN/MPLS connection with guaranteed bandwidth.

Furthermore, the remote encoder 200 is configured to receive a second audiovisual content 165 and to produce a second compressed audiovisual content by processing said second audiovisual content at least partially. Processing content at least partially means, for example, processing a part of the content (whereas another part is not processed), or partially processing the content, or else partially processing a part of the content and not processing another different part of the content. For example, if the second audiovisual content 165 is partially compressed, the remote encoder can completely, or wholly, process the second audiovisual content 165.

The second audiovisual content includes one or more second audiovisual temporal references. Said second audiovisual temporal references comprise information that indicates in what temporal order the second audiovisual content is reproduced. Said second audiovisual temporal references can be in a partially compressed, non-compressed or compressed format. For example, the second audiovisual temporal references can constitute a set of temporal data (t₁, ..., tₘ) that indicate the temporal sequence of the input frames making up the second audiovisual content, or which are comprised in the second audiovisual content. The temporal sequence indicated by the first temporal references and the temporal sequence indicated by the second temporal references are such that the local encoder and the remote encoder can produce synchronous sequences. Correspondingly, the temporal sequence indicated by the first temporal references and the temporal sequence indicated by the second temporal references are such that a decoder is capable of replacing the first content with the second content (and vice versa) by maintaining synchronism between the two content even during the switch between the signal received from one encoder to the signal received from the other encoder. In one example, the temporal sequence indicated by the first temporal references is the same temporal sequence as the one indicated by the second temporal references. In one example, the (same) temporal sequence can be applied to each frame of each content; in another example, the temporal sequence can be applied to corresponding frames of the respective content with a pre-established frequency or a pre-established interval between respective frames of each content (e.g. the temporal references are given for the frames Fi, Fi+N for the first content and correspondingly for the frames Fi, Fi+N for the corresponding frames of the second content, wherein N is an interval - even dynamically variable - between frames to which a timestamp is added by the encoders).

In the examples in which the second audiovisual content 165 is in a compressed or partially compressed format, the second temporal audiovisual references can comprise or be represented by information included in the second audiovisual content as represented, for example, by an SEI (Supplemental Enhancement Information) message indicating temporal references. In one example, the SEI picture timing messages can be included in the second (partially) compressed audiovisual content 165. In another example, the term second audiovisual temporal reference can refer to a combination of a PTS (Presentation TimeStamp) and an SEI picture timing message. In still other examples, the second temporal audiovisual references can be temporal information included in the second partially compressed or compressed audiovisual content. In these cases, the second audiovisual references can be introduced during the compression (or partial compression), and/or before/after the compression (or partial compression). In other words, the first temporal references can comprise or be represented by timestamps provided to give a temporal reference (for example, for the synchronisation or editing of content) to the content frames independently of the encoding of content or how the latter (once compressed) must be decoded, and are thus temporal references that link the frame in the compressed or partially compressed domain to the frames in the non-compressed domain of the content. Therefore, in the SEI example, the picture timing SEI (as an example of a timecode inserted in the compressed domain) enables the remote encoder to be synchronised with the VITC (example of a timecode in the non-compressed domain) of the local encoder (which consumes a non-compressed stream with VITC precisely). Both encoders can thus produce a stream with PTS aligned with each other, in order to ensure a seamless switch/failover.

Preferably, said one or more first audiovisual temporal references correspond to said one or more second audiovisual temporal references, i.e. it is possible to map each one of said one or more first audiovisual temporal references to a corresponding audiovisual temporal reference among said one or more second audiovisual temporal references. In other words, said one or more first audiovisual temporal references and said one or more second audiovisual temporal references indicate a same temporal sequence. This correspondence between temporal references enables the local encoder and the remote encoder to produce content that can be synchronised, i.e. the correspondence is reflected in the first compressed audiovisual content and the second compressed audiovisual content, enabling a receiver receiving the first compressed audiovisual content and the second compressed audiovisual content to synchronize them, even if they are received with a time difference. In other words, the first and the second content contain respective video frames synchronised with each other (by means of the respective temporal references) and the decoder outputs respective compressed frames synchronised with each other (as indicated by the respective compressed temporal references that correspond to the respective input temporal references; i.e. the compressed temporal references maintain synchronisation at the frame level of the input temporal references).

Unlike in the prior art, the local encoder and the remote encoder respectively process a first and a second audiovisual content that respectively contain first and second audiovisual temporal references. The first and second compressed audiovisual content produced respectively by the local encoder and the remote encoder can thus be synchronised. If one of the encoders has a failure, the audiovisual stream can be obtained from the other encoder without any interruption. In fact, the temporal references associated with an audiovisual content make it possible to replace the content coming from the encoder that has failed with the content coming from the functioning encoder at the appropriate instant, that is, without losing any frame and without transmitting the same frame more than once. Consequently, it is possible to obtain a continuous, uniform audiovisual stream. Uniform in this context refers to the fact that the audiovisual stream is constructed using every frame in an ascending temporal order. In other words, the audiovisual temporal references enable a receiver that receives the first compressed audiovisual content and the second compressed audiovisual content to synchronise the two compressed audiovisual content with each other during decoding, even if corresponding parts of the first audiovisual content and of the second audiovisual content are not received synchronously (for example, if the delay in transmission between the remote encoder and the receiver is not equal to the delay in transmission between the local encoder and the receiver, or if the encoders emit their content with a time difference). Consequently, the receiver, when it decodes the first compressed audiovisual content, can switch to decode the second compressed audiovisual content and vice versa, thus obtaining the original audiovisual content without or with only a minimal loss of frames and/or with little or no re-transmission of frames.

The local encoder and the remote encoder are preferably configured to contemporaneously process the first audiovisual content and the second audiovisual content, respectively. Contemporaneously means that the processing of audiovisual content takes place in overlapping periods of time, i.e. that in at least one moment, both encoders process their respective audiovisual content (contemporaneously can therefore be seen as the two decoders working in parallel on the compression of the respective content that is input). For example, the local encoder and the remote encoder can be configured to process each audiovisual content as soon as received from a source of audiovisual content. In this example, the local encoder can receive the content before the remote encoder and produce the first compressed audiovisual content at an earlier time than the second compressed audiovisual content produced by the remote encoder. Or, the local encoder and the remote encoder can be configured to reduce or eliminate the time difference between the processing of the audiovisual content, so that the processing of the audiovisual content takes place in synchronisation. For example, the local encoder can be configured to process the first audiovisual content 150 with a delay corresponding to a time to receive the second audiovisual content by the remote encoder, as explained more in detail in a variant below.

In an optional variant of the first embodiment, the first and second compressed audiovisual content each include one or more compressed audiovisual temporal references at respective compressed frames. In other words, the temporal references refer to the respective compressed content, in particular to the compressed frames.

In an optional variant of the first embodiment, the first and the second compressed audiovisual content comprise a respective first and second sequence of compressed frames, each one of said sequences comprising one or more frames associated with respective one or more compressed temporal references. As previously described with regard to the first audiovisual content, the compressed temporal references can similarly be inserted in every compressed frame, or they can be inserted every r compressed frames (wherein r can be a predetermined number). Furthermore, the first and the second audiovisual content comprise a respective first and second sequence of input frames, each one of said sequences comprising one or more input frames associated with one or more respective first and second temporal references, wherein said one or more compressed temporal references respect the temporal sequence of said one or more first and second temporal references.

In a further optional variant of the first embodiment, said first and second compressed audiovisual content are substantially identical and said one or more compressed audiovisual temporal references included in the first compressed audiovisual content and said one or more compressed audiovisual temporal references included in the second compressed audiovisual content are substantially identical. Substantially identical means equal or identical or at least partially identical. That is, a part of the signal can be different, but the data of the first compressed audiovisual content and the data of the second compressed audiovisual content can be mapped together. The same applies for the temporal references.

In a further optional variant of the first embodiment, the first and/or the second compressed audiovisual content comprise one or more segments, each of said segments comprising one or more frames, and wherein said one or more compressed audiovisual temporal references are inserted in at least one of said frames. For example, said compressed audiovisual temporal references are included or comprised in at least one of said frames. They can also be metadata that accompany said frame. A compressed temporal reference can comprise information indicating how the frames must be reproduced over time relative to other frames.

Consequently, said one or more segments and said one or more frames included in the first compressed content are synchronised with the respective said one or more segments and respective said one or more frames comprised in the second compressed content.

In a further optional variant of the first embodiment, one frame of the first compressed audiovisual content comprising a first compressed audiovisual temporal reference between said one or more compressed audiovisual temporal references is substantially identical to a frame of the second compressed audiovisual content containing the same compressed audiovisual temporal reference. That is, a frame of the first compressed audiovisual content comprising a first compressed audiovisual temporal reference corresponds or is equivalent to a frame of the second compressed audiovisual content containing the same compressed audiovisual temporal reference.

In the event of failure of one of the encoders, it is possible to start transmitting the content coming from the encoder with the right frame, i.e. the temporal order of the frames making up the content sent to the user device is preserved.

In a further optional variant of the first embodiment, said first audiovisual content and said second audiovisual content are substantially identical and said one or more first audiovisual temporal references and said one or more second audiovisual temporal references are substantially identical. That is, the second audiovisual content is equal to the first audiovisual content, i.e. it is the content received from a source of audiovisual content. Furthermore, the first audiovisual temporal references and the second audiovisual temporal references are likewise equal. That is, the second audiovisual temporal references are in the non-compressed domain.

According to one example of the first embodiment, the local encoder can compress the first audiovisual content, thereby producing a first compressed audiovisual content, and it can compress said one or more first audiovisual temporal references, thereby producing said one or more compressed audiovisual temporal references. Using the first compressed audiovisual content, the local encoder can produce one or more frames. The local encoder can insert said compressed temporal references in said one or more frames. For example, a compressed temporal reference can be inserted in a frame, or a compressed reference can be inserted in every frame, or else a compressed temporal reference can be inserted in every n frames, wherein *n* is a predetermined number. The local encoder can then use said one or more frames thus processed to create one or more segments (chunks).

The local encoder can be configured to create a manifest file on the basis of said one or more segments. Manifest file means a file in which the components of a video are listed, for example the URLs of the segments into which the video was broken down. That is, every segment corresponds to a single file that is listed in the manifest file containing the URLs of different files which comprise the video. For example, when a user requests to view a content such as a video, they receive in response a manifest file containing, for example, a URL that enables them to download one or more segments.

The local encoder can further be configured to send the manifest file thus created to a switch 500, that is, a device that is configured to receive a manifest file from an encoder and transmit the manifest file to the user. The switch can be located on site with a user device, or remotely relative to the user device. The user device can comprise a television device, such as a set-top-box (STB), a decoder and/or TV, or a display means or a display means with additional features, for example the TV can include an STB. The user device can also be a mobile telephone, such as a smartphone, a tablet or a PC.

In addition, the local encoder can be configured to send said one or more segments to the switch. The switch can be configured to receive said one or more segments and construct the manifest file on the basis of said one or more segments. In this case, the switch can be a packager.

The same applies for the remote encoder. In the same manner, therefore, the switch receives a second manifest file from the remote encoder. Or else, or in addition, the switch can receive one or more segments from the remote encoder and construct the second manifest file.

The switch can further be configured to select to receive said one or more segments from the local encoder and/or from the remote encoder. In addition, the switch can be further configured to select to receive said one or more manifest files from the local encoder and/or the remote encoder. Said selection (of the local and/or remote encoder) can be made on the basis of a selection message received by the switch. Said selection message can be sent by the remote encoder, the local encoder, the server, the CDN or also the user device. Said selection message can include information regarding the operation of the local encoder and/or the remote encoder. For example, if the local encoder has a failure, the switch will select to receive the signal (segments or manifest files) from the remote encoder. If the remote encoder then has a failure, the switch will select to receive the signal (segments or manifest files) from the local encoder.

Given that the produced segments and/or manifest files of the local encoder and the produced segments and/or manifest files of the remote encoder were constructed on the basis, respectively, of the first temporal references and second temporal references, said produced segments and/or manifest files of the local encoder and said produced segments and/or manifest files of the remote encoder correspond, i.e. the temporal sequence of frames input to each encoder is the same, and the same temporal sequence of frames is output so as to replicate the input temporal sequence of frames. Consequently, as discussed above, it is possible to obtain a continuous and uniform audiovisual stream.

In a further optional variant of the first embodiment, the system comprises an intermediate encoder 400. The intermediate encoder can be comprised in the transmission entity 10 or connected thereto. Alternatively, it can be associated with a different transmission entity or it can be in the cloud. The intermediate encoder 400 is configured to produce the second audiovisual content 165 by compressing, at least partially, the first audiovisual content 150. In a first example, the second audiovisual content 165 (intermediate content) is mezzanine audiovisual content, i.e. a slightly compressed version of the first audiovisual content 150 (source content). In a second example, the intermediate encoder can be the encoder used for terrestrial or satellite distribution, i.e. the same compressed video as sent over a terrestrial/satellite system is sent to the remote encoder 100.

In other words, the first audiovisual content 150 (source content) undergoes a first high-level compression. The second audiovisual content 165 thus produced is sent via the internet to the remote encoder 200. In this manner, the necessary bandwidth via the internet is more limited. In particular, the second audiovisual content 165 is compressed at a level allowing it to be further compressed at any resolution required by the user devices that receive the streaming, for example, from the mezzanines it is possible to obtain the profile at maximum resolution (for example 4K TV), and any profile at a lower resolution required by different user devices.

The second intermediate audiovisual content comprises the result of the (partial) compression of the first audiovisual content performed by the intermediate encoder. That is, it has an intermediate compression ratio between the first audiovisual content (content source) and the one with a lower resolution which will be transmitted towards the switch or towards a user device. For example, the second intermediate audiovisual content can comprise a mezzanine file. A mezzanine file is a partially compressed file that can later be further compressed. The second intermediate audiovisual content is smaller and simpler to transport than the source content. It is further easier to back up than the source content.

In some cases, such as, for example, in the case of a live programme, transmitting an non-compressed content to the remote encoder can introduce delays, making it difficult for the remote encoder to remain synchronised with the local encoder. This lack of synchronisation makes it more difficult for the remote encoder to step in when necessary (i.e. it is not easy to obtain a hot standby cloud). With the solution described, the remote encoder receives an content that has already been partially compressed, and it will thus have to only partially compress that content. In this manner, one can avoid delays and the synchronisation of the content coming from the local encoder and from the remote encoder is optimised.

In addition, the second audiovisual content produced by the intermediate encoder can be accompanied by information related to metadata regarding the intermediate encoding/processing. That is, the information related to metadata can be inserted in the second audiovisual content or else it can be additional with respect to the second audiovisual content. In this manner, the remote encoder can further optimise the encoding/processing process. For example, the metadata can include information regarding how the mezzanines were obtained. The remote encoder can then use this information to process more quickly and/or with greater efficiency.

In a further optional variant, the intermediate encoder is configured to process said one or more first audiovisual temporal references included in the first audiovisual content 150, thereby producing said one or more second audiovisual temporal references. That is, the intermediate encoder can process the first audiovisual temporal references and bring them into a compressed format, thus forming compressed audiovisual temporal references. In one example, said one or more first temporal audiovisual references can be timecodes (for example SMPTE timecodes, or VITC) included in the first audiovisual content, and the intermediate encoder can be configured to process the timecode (such as the VITC) and produce said one or more second temporal audiovisual references, which can be SEI messages (for example SEI picture timing message(s)), or a combination of SEI picture timing message(s) and PTS. In other examples, the intermediate encoder can be configured to process the first temporal audiovisual references present in the non-compressed format of audiovisual content, in order to generate the second temporal audiovisual references to be included in the second (partially) compressed audiovisual content. As mentioned, the temporal references in the compressed domain maintain a synchronisation with the respective frames in the compressed domain, something that cannot be reached with other timestamps such as, for example, PTS, conceived only to maintain the sequence of presentation of the frames, but not a synchronisation with the original non-compressed frames. For example, during compression (even partial), the number of frames per second in the compressed domain can be reduced compared to that in the non-compressed domain; the generation of compressed timecodes (e.g. SEI timecodes), on the other hand, allows for maintaining a correspondence with the original frames.

In a further optional variant, said second audiovisual temporal references are substantially identical to said second compressed audiovisual temporal references. That is, the intermediate encoder compresses the first temporal references and produces the second audiovisual temporal references; these temporal references are compressed and correspond, i.e. they are equivalent, to the second compressed temporal references.

In other words, according to one example of the invention, the content received from the remote encoder is partially compressed content, i.e. the intermediate encoder partially compresses the first audiovisual content and sends it to the remote encoder. Furthermore, the intermediate encoder processes the first temporal references and brings them into a compressed format, thereby forming the compressed audiovisual temporal references. The remote encoder receives the second audiovisual content, which is partially compressed, and compresses it further, forming one or more frames. Furthermore, it processes the compressed audiovisual temporal references, inserting them in one or more frames.

In a further optional variant, the remote encoder 200 is configured to receive a request message. The request message can comprise information related to the operation of the remote encoder, i.e. it corresponds to a condition for the operation of the remote encoder. This condition for the operation of the remote encoder can depend on particular events. In one example, a condition can be related to the distributed programme (or to the importance of the distributed programme, i.e. when a programme that is distributed via the internet is considered to be very important). In another example, the condition for the operation of the remote encoder can be related to the presence of a further remote encoder. That is, when a further encoder is not presently available (wherein said further encoder operates as said remote encoder described above during normal operation). In the latter example, there are two levels of redundancy. The request message can be sent to the remote encoder by the local encoder, the server, the CDN or also the user device.

Unlike in the prior art, the operation of the remote encoder is triggered (caused) by the request message that is received by the remote encoder. That is, it is possible to decide that the remote encoder is active or is not active. Consequently, it is not necessary for the remote encoder to be constantly active; it will be activated on request, that is, by means of the request message. The remote encoder will be activated on the basis of the information contained in the request message (such as, for example, information about the distributed programme, information regarding other encoders). In this manner, it is possible to improve the level of service, for example in the case of major live events. Moreover, this allows for scaling in the public cloud while maintaining the quality typical of broadcasting systems and avoiding the need to scale the on-site infrastructure. In addition, moreover, the workload of the remote encoder and of the system are substantially decreased.

In a further optional variant, the remote encoder 200 is configured to compress the second audiovisual content on the basis of the request message. That is, the processing of the second audiovisual content takes place on the basis of the request message, i.e. on the basis of the information contained in the request message. For example, the request message communicates the need for the remote encoder to compress the intermediate audiovisual content. If, for example, the distributed programme is an event not considered to be important, the request message will include information specifying that condition and the remote encoder will not compress the second audiovisual content.

In a further optional variant, the intermediate encoder 400 is configured to receive a second request message. The second request message can comprise information related to the operation of the intermediate encoder, i.e. it corresponds to a condition for the operation of the intermediate encoder. This condition can depend on particular events and/or can be related to the presence of a further intermediate encoder.

In this manner, the operation of the intermediate encoder can be triggered by the request message. Consequently, it is not necessary for the intermediate encoder to always remain active; rather, it can be activated on request. The workload of the intermediate encoder and of the system is thus substantially decreased.

In a further optional variant, the local encoder 100 is configured to receive the first audiovisual content from a source of audiovisual content 300. Examples of a source of audiovisual content are a content provider, video source or capture source, e.g. a camera or capture hardware.

According to a further optional variant, the local encoder is configured to process the first audiovisual content 150 with a delay corresponding to a time of reception of the second audiovisual content by the remote encoder. That is a delay corresponding to a delay in the distribution chain up to the remote encoder. For example, the delay can correspond to a time of distribution of the content to the remote encoder. In other words, the reception of the second audiovisual content by the remote encoder can take place with a delay relative to the reception of the first audiovisual content by the local encoder. This delay is due to the fact that the remote encoder is located remotely relative to the local encoder (delay in transmission, transcoding). This delay can be due in particular to the fact that there is an intermediate encoder or, in general, to possible processing in intermediate steps, etc. By delaying the local encoder it is possible to have processing in parallel by the local encoder and the remote encoder, that is, the two encoders will compress the same content in parallel.

The above-described variants can be combined with one another, as will be evident to the person skilled in the art. Furthermore, the first embodiment is directed towards a system according to the present invention. However, all of the above considerations and variants apply to devices, such as the remote encoder and the local encoder, as well as to a method, computer programmes and other examples and embodiments as also illustrated below. Where various details have to be omitted for the sake of brevity, it is noted that all of the observations made above apply equally to what is set forth below.

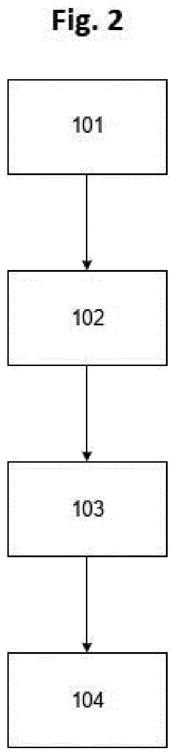

A second embodiment will now be described with reference to figure 2, which illustrates a flow diagram related to a method for compressing audiovisual content.

Said method is implemented in a system comprising a local encoder 100 and a remote encoder 200. The system can further comprise an intermediate encoder 400.

The method comprises a step of receiving S101, at the local encoder 100, a first audiovisual content. The local encoder 100 is located on site with a transmission entity 10. The method then comprises a step of producing S102, at the local encoder 100, a first compressed audiovisual content by compressing the first audiovisual content, wherein the first audiovisual content includes one or more first audiovisual temporal references. The method further comprises a step of receiving S103, at the remote encoder 200, located remotely 20 relative to the local encoder, a second audiovisual content, and a step of producing S104, at the remote encoder 200, a second compressed audiovisual content by compressing the second audiovisual content, wherein the second audiovisual content includes one or more second audiovisual temporal references.

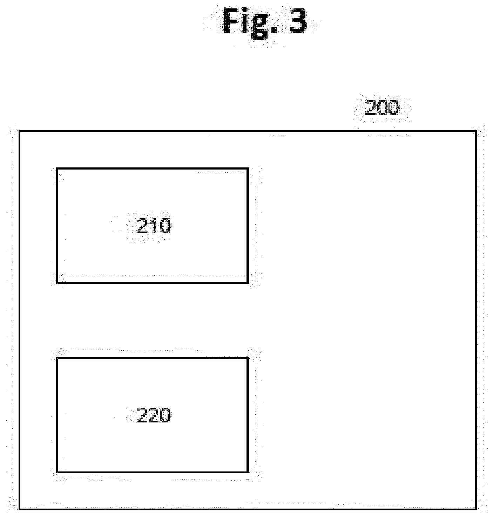

A third embodiment will now be described with reference to figure 3, which illustrates a block diagram relating to a remote encoder 200. The receiving means 210 is configured to receive a second audiovisual content 165. The encoding means 220, on the other hand, is configured to produce a second compressed audiovisual content by compressing said second audiovisual content, wherein the second audiovisual content includes one or more second audiovisual temporal references.

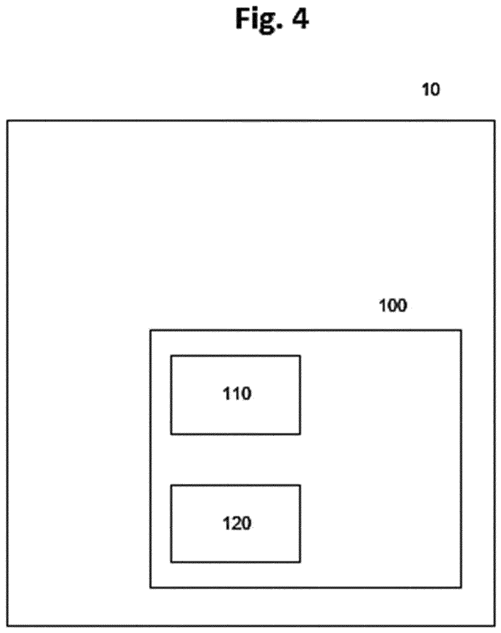

A fourth embodiment will now be described with reference to figure 4, which illustrates a block diagram relating to a local encoder 100. Said local encoder is located on site with a transmission entity 10. The receiving means 110 is configured to receive a first audiovisual content 150. The encoding means 120, on the other hand, is configured to produce a first compressed audiovisual content by compressing said first audiovisual content, wherein the first audiovisual content includes one or more second audiovisual temporal references.

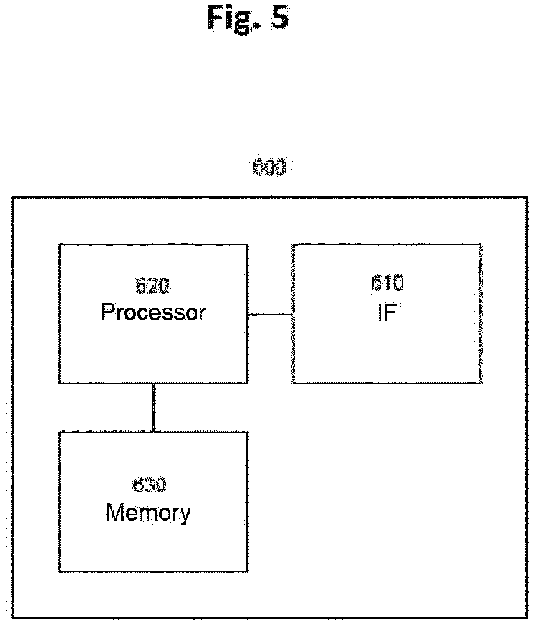

According to another embodiment, there is provided a computer program configured to execute, when the program is run on a computer, any of the steps or a combination of the steps of the method and possible variants thereof as described with reference to the second embodiment. Figure 5 illustrates a block diagram exemplifying a computer 600 capable of executing the aforesaid program. In particular, the computer 600 comprises a memory 630 for storing the program instructions and/or the data necessary for the execution thereof, a processor 620 for implementing the instructions and an input/output interface 610. In particular, figure 5 is illustrative and not limiting, since the computer can in fact be constructed either in such a manner as to be concentrated in one device, or in manner such as to be distributed over a number of interconnected devices. Therefore, the program can be executed locally on a concentrated (localised) or distributed device.

According to a further embodiment, there is provided a medium for supporting a computer program configured to implement, when the program is run on a computer, one or a combination of the steps according to the method described in the second embodiment. Examples of a medium are a static and/or dynamic memory, a fixed disk or any other medium such as a CD, DVD or Blu-Ray. The medium also comprises a means capable of supporting a signal representing the instructions, including a means for wired transmission (ethernet, optical, etc.) or wireless transmission (cellular, satellite, digital terrestrial transmission, etc.).

Thanks to the teachings described here, it is possible to obtain a system for the compression of audiovisual content that is optimised compared to the compression performed in the prior art. In fact, by means of the above-described system it is possible to produce a continuous, uniform audiovisual stream. It is further possible to activate the remote encoder on demand, i.e. on request, thus substantially lowering the workload of the remote encoder and of the system.

Naturally, the above description of embodiments and examples applying the principles recognised by the inventors has been provided solely for the purpose of exemplifying such principles and must therefore not be construed as a limitation of the scope of the invention claimed herein.

## Claims

1. A system for compressing audiovisual content, comprising:
a local encoder (100) located on site with a transmission entity (10), the local encoder (100) being configured to receive a first audiovisual content (150) and to produce a first compressed audiovisual content by processing the first audiovisual content (150); wherein the first audiovisual content includes one or more first audiovisual temporal references;
a remote encoder (200) located (20) remotely relative to the local encoder (100), the remote encoder (200) being configured to receive a second audiovisual content (165) and to produce a second compressed audiovisual content by processing said second audiovisual content at least partially;
wherein said second audiovisual content includes one or more second audiovisual temporal references.

2. The system according to claim 1, wherein each one of the first and the second compressed audiovisual content includes one or more compressed audiovisual temporal references at respective compressed frames.

3. The system according to claim 2,
wherein the first and the second compressed audiovisual content comprise a respective first and second sequence of compressed frames, each one of said sequences comprising one or more frames associated with respective one or more compressed temporal references,
wherein the first and the second audiovisual content comprise a respective first and second sequence of input frames, each one of said sequences comprising one or more input frames associated with one or more respective first and second temporal references,
wherein said one or more compressed temporal references respect the temporal sequence of said one or more first and second temporal references.

4. The system according to one of claims 2 or 3, wherein said first and second compressed audiovisual content are substantially identical and wherein said one or more compressed audiovisual temporal references included in the first compressed audiovisual content and said one or more compressed audiovisual temporal references included in the second compressed audiovisual content are substantially identical.

5. The system according to any one of claims 1 to 4, comprising an intermediate encoder (160) configured to produce the second audiovisual content (165) by compressing, at least partially, the first audiovisual content (150).

6. A method for compressing audiovisual content, the method comprising the steps of:
receiving (S101), at a local encoder, a first audiovisual content;
producing (S102), at the local encoder, a first compressed audiovisual content by compressing the first audiovisual content;
wherein the first audiovisual content includes one or more first audiovisual temporal references;
receiving (S103), at a remote encoder located remotely (20) relative to the local encoder, a second audiovisual content;
producing (S104), at the remote encoder, a second compressed audiovisual content by compressing the second audiovisual content;
wherein the second audiovisual content includes one or more second audiovisual temporal references.

7. A remote encoder (200) located remotely (20), comprising:
a receiving means (210) configured to receive a second audiovisual content (165);
an encoding means (220) configured to produce a second compressed audiovisual content by compressing said second audiovisual content;
wherein the second audiovisual content includes one or more second audiovisual temporal references.

8. A local encoder (100) located on site with a transmission entity (10), comprising:
a receiving means (110) configured to receive a first audiovisual content (150);
an encoding means (120) configured to produce a first compressed audiovisual content by compressing said first audiovisual content;
wherein the first audiovisual content includes one or more second audiovisual temporal references.

9. A computer program configured to execute, when said program is run on a computer, all of the steps according to method claim 6.

10. A medium for storing a computer program configured to execute, when said program is run on a computer, all of the steps according to method claim 6.
